# EUROPÄISCHE PATENTANMELDUNG

(11) **EP 4 230 552 A1**
(43) Veröffentlichungstag der Anmeldung: **23.08.2023**
(21) Anmeldenummer: 23156547.4
(22) Anmeldetag: 14.02.2023
(51) Int. Cl.: B65G 47/28

(54) **VEREINZELUNGSVORRICHTUNG FÜR HÄNGEFÖRDERANLAGE**

(30) Priorität: 17.02.2022 DE 102022103809
(71) Anmelder: Dematic GmbH, 63150 Heusenstamm (DE)
(72) Erfinder: Tinnacher, Andreas, 8570 Voitsberg (AT); Peiser, Thomas, 8103 Gratwein-Straßengel (AT)
(74) Vertreter: Moser Götze & Partner Patentanwälte mbB

(57) **Zusammenfassung**

Vereinzelungsvorrichtung (1) zur Vereinzelung von Halteadaptern (20) in einer Fördervorrichtung zur Beförderung von hängenden Gegenständen, wobei die Vereinzelungsvorrichtung (1) zwei Vereinzelungselemente (2) aufweist, welche jeweils als Scheibe mit mehreren als Ritzelzähne (4) ausgebildeten Mitnahmeelementen ausgebildet sind und welche in einer Ebene gegenläufig zueinander drehbar gelagert und derart zueinander beabstandet angeordnet sind, dass Halteadapter (20) durch die Vereinzelungselemente (2) hindurch beförderbar sind, wobei sich in einer möglichen Drehstellung der Vereinzelungselemente (2) auf einer gedachten Linie zwischen einer Drehachse (D) eines ersten Vereinzelungselements (2') und einer Drehachse (D) eines zweiten Vereinzelungselements (2") ein Ritzelzahn (4) des ersten Vereinzelungselements (2') und ein Ritzelzahn (4) des zweiten Vereinzelungselements (2") mit ihren Stirnseiten (4c) gegenüber stehen.

## Beschreibung

Die Erfindung betrifft eine Vereinzelungsvorrichtung nach Anspruch 1, ein System mit einer solchen Vereinzelungsvorrichtung nach Anspruch 7 sowie ein Verfahren zur Vereinzelung nach Anspruch 10.

Eine Fördervorrichtung zur Beförderung von hängenden Gegenständen, wie beispielsweise Kleidungsstücken, Taschen und dergleichen, ist eine Sortier- und Verteilvorrichtung und spielt in der Intralogistik eine wichtige Rolle, wo sie häufig als Schnittstelle zwischen Lagerung und Auslieferung eingesetzt wird. Um den steigenden Anforderungen der Kunden gerecht zu werden, unterliegen die Fördervorrichtungen einer ständigen Weiterentwicklung, insbesondere hinsichtlich Prozesssicherheit und Effizienz.

Gattungsgemäße Fördervorrichtungen weisen Schienenprofile auf, an denen Halteadapter gelagert und geführt sind. Die vorzugsweise mit Rollen ausgestatten Halteadapter sind insbesondere in einem unteren Bereich des Schienenprofils, insbesondere in einer sogenannten Free-Laufschiene, gelagert und geführt. An den Halteadaptern sind, vorzugsweise unterhalb der Free-Laufschiene, die hängenden Gegenstände lösbar befestigt. In den Schienenprofilen ist zudem eine Förderkette der Fördervorrichtung angeordnet, mit der die Halteadapter zu deren Beförderung koppelbar sind. Dazu greifen Mitnehmer der Förderkette insbesondere an einem Kopfteil des Halteadapters an, welches sich vorzugsweise in einen oberhalb der Free-Laufschiene befindlichen Bereich des Schienenprofils erstreckt.

Um vor Entscheidungspunkten oder Anwendungen der Fördervorrichtung Abstände zwischen den Halteadaptern bzw. daran befestigten Gegenständen zu generieren und somit die Halteadapter bzw. daran befestigte Gegenstände für eine prozesssichere Weiterbehandlung an den Entscheidungspunkten oder Anwendungen zu vereinzeln, werden in der Fördervorrichtung, insbesondere an deren Schienenprofilen, sogenannte Vereinzelungsvorrichtungen vorgesehen.

Bekannte Vereinzelungsvorrichtungen basieren auf einer linearen Bewegung eines einzelnen langestreckten bzw. stabförmigen Vereinzelungselements, welches in eine Förderstrecke für die Halteadapter verschiebbar ist. Solche Vereinzelungsvorrichtungen haben jedoch den Nachteil, dass das Vereinzelungselement nach einem Vereinzelungsvorgang immer wieder in eine Ausgangsposition zurückgefahren werden muss. Auch kann es bei einer solchen Vereinzelungsvorrichtung vorkommen, dass der Halteadapter in der Vereinzelungsvorrichtung stehen bleibt, also nicht weiterbefördert wird, und es somit zu einer Störung des Betriebsablaufs kommt. Zudem werden solche Vereinzelungsvorrichtungen üblicherweise mit einem Pneumatikzylinder betrieben. Der Einsatz von Pneumatik in Fördervorrichtungen zur Beförderung von hängenden Gegenständen ist jedoch nicht mehr erlaubt.

Aus der DE 202 17 423 U1 ist außerdem eine Weiche eines Sammelförderers für an Bügeln hängende Ware bekannt, an der aus zwei Richtungen Bügel zugefördert werden und welche keine Vereinzelungsvorrichtungen darstellen. An den Weichen sind zur Weiterbeförderung der Bügel zwei über eine Kette angetriebene Scheiben mit Mitnehmern vorgesehen. Die eine Scheibe befördert dabei die aus einer ersten Richtung kommenden Bügel und die andere Scheibe die aus einer zweiten Richtung kommenden Bügel weiter. Die Mitnehmer der beiden Scheiben sind als Mitnehmerklinken oder Stiftmitnehmer ausgebildet. Die Mitnehmer der einen Scheibe arbeiten mit einem rotatorischen Versatz zu den Mitnehmern der anderen Scheibe. Zudem überlappen in der Draufsicht die Mitnehmer der einen Scheibe die andere Scheibe und umgekehrt.

Zudem ist aus der US 5,501,552 A eine Weiche einer Förderanlage zur Beförderung von instabilen Gegenständen bekannt, wobei die Weiche analog zu derjenigen aus der DE 202 17 423 U1 ausgebildet ist und ebenfalls keine Vereinzelungsvorrichtung darstellt. Die Weiche umfasst vier Sternräder, mit denen eine Weiterbeförderung der instabilen Gegenstände erfolgt. An einem Paar von Sternrädern wird der Gegenstand von einem Sternrad an das andere übergeben, wobei die beiden Sternräder hierzu in unterschiedlichen Ebenen drehbar gelagert sind und in unterschiedlichen Ebenen an dem Gegenstand angreifen. An einem weiteren Paar von Sternrädern arbeiten die Arme des einen Sternrads mit einem rotatorischen Versatz zu den Armen des anderen Sternrads.

Demgegenüber besteht die Aufgabe der vorliegenden Erfindung darin, eine Vereinzelungsvorrichtung, ein System mit einer solchen Vereinzelungsvorrichtung sowie ein Verfahren zur Vereinzelung bereitzustellen, mit welchen eine prozesssichere Vereinzelung erfolgen kann.

Diese Aufgabe wird durch die Vereinzelungsvorrichtung mit den Merkmalen des Anspruchs 1, das System mit den Merkmalen des Anspruchs 7 sowie das Verfahren mit den Merkmalen des Anspruchs 10 gelöst. Vorteilhafte Ausgestaltungen ergeben sich aus den Unteransprüchen und der Beschreibung.

Erfindungsgemäß wird eine Vereinzelungsvorrichtung zur Vereinzelung von Halteadaptern in einer Fördervorrichtung zur Beförderung von hängenden Gegenständen bereitgestellt, wobei die Vereinzelungsvorrichtung zwei Vereinzelungselemente aufweist, welche jeweils als Scheibe mit mehreren als Ritzelzähne ausgebildeten Mitnahmeelementen ausgebildet sind und welche in einer Ebene gegenläufig zueinander drehbar gelagert und derart zueinander beabstandet angeordnet sind, dass Halteadapter durch die Vereinzelungselemente hindurch beförderbar sind, wobei als Mitnahmeelemente Ritzelzähne vorgesehen sind und sich in einer möglichen Drehstellung der Vereinzelungselemente auf einer gedachten Linie zwischen einer Drehachse eines ersten Vereinzelungselements und einer Drehachse eines zweiten Vereinzelungselements ein Ritzelzahn des ersten Vereinzelungselements und ein Ritzelzahn des zweiten Vereinzelungselements mit ihren Stirnseiten gegenüber stehen.

Die Vereinzelungselemente der auch als Trenneinrichtung bezeichneten Vereinzelungsvorrichtung sind als Scheibe und damit flach ausgebildet sowie mit Ritzelzähnen versehen, die für ein Angreifen an den zwischen den Vereinzelungselementen angeordneten Halteadaptern geeignet sind. Die so ausgebildeten Vereinzelungselemente können aufgrund ihres Aussehens auch als sternförmig bezeichnet werden. Vorzugsweise weisen beide Vereinzelungselemente eine gleiche Anzahl an Ritzelzähnen auf.

Unter dem Begriff Halteadapter wird vorliegend sowohl ein leerer Halteadapter, als auch ein Halteadapter mit einem daran befestigten Gegenstand verstanden. Der vorzugsweise rollbar gelagerte Halteadapter weist insbesondere ein Angriffselement auf, an dem die Vereinzelungselemente bzw. deren Ritzelzähne für eine Mitnahme angreifen. Ein solches Angriffselement ist insbesondere an einem Halsteil des Halteadapters angeordnet oder durch das Halsteil des Halteadapters gebildet. Das Angriffselement bzw. das Halsteil ist insbesondere unterhalb eines Schienenprofils bzw. unterhalb einer Free-Laufschiene des Schienenprofils angeordnet.

Gegenläufig drehbar gelagert bedeutet, dass das erste Vereinzelungselement in einer ersten Drehrichtung, beispielsweise im Uhrzeigersinn, und das zweite Vereinzelungselement in einer zweiten, entgegen der ersten Drehrichtung gerichteten, Drehrichtung, beispielsweise entgegen des Uhrzeigersinns, drehbar gelagert sind. Die Vereinzelungselemente sind in einer Ebene drehbar gelagert, was bedeutet, dass sich die Drehachse des ersten Vereinzelungselements von der Drehachse des zweiten Vereinzelungselements unterscheidet.

Die Vereinzelungselemente, insbesondere deren Drehachsen sind derart weit voneinander entfernt angeordnet, dass in einer Draufsicht kein Überlappen eines Ritzelzahns des ersten Vereinzelungselement mit dem zweiten Vereinzelungselement auftreten kann und umgekehrt.

Zudem sind die Vereinzelungselemente derart nah beieinander angeordnet, dass in der möglichen Drehstellung der Vereinzelungselemente, bei welcher auf der gedachten Linie zwischen der Drehachse des ersten Vereinzelungselements und der Drehachse des zweiten Vereinzelungselements ein Ritzelzahn des ersten Vereinzelungselements und ein Ritzelzahn des zweiten Vereinzelungselements mit ihren Stirnseiten gegenüber stehen, kein Halteadapter, insbesondere kein Angriffselement des Halteadapters zwischen den sich gegenüberstehenden Ritzelzähnen durchpasst. Der Halteadapter wird bei dieser Stellung an den sich gegenüberstehenden Ritzelzähnen gestoppt und festgehalten. Ein ungewolltes Durchrutschen eines Halteadapters wird somit verhindert. Erst bei einer Drehung der Vereinzelungselemente aus dieser Drehstellung heraus ist eine Weiterbeförderung des Halteadapters möglich.

Die Vereinzelungselemente sind beidseitig einer, insbesondere durch Schienenprofile gebildeten, Fördererstrecke, entlang derer die Halteadapter befördert werden, angeordnet. Die Vereinzelungselemente sind dabei bezogen auf die Förderstrecke spiegelsymmetrisch angeordnet. Bei der erfindungsgemäßen Vereinzelungsvorrichtung ist also kein rotatorischer Versatz zwischen den Ritzelzähnen des ersten Vereinzelungselements und den Ritzelzähnen des zweiten Vereinzelungselements vorgesehen.

Alternativ kann vorgesehen sein, dass die Vereinzelungsvorrichtung lediglich ein einzelnes Vereinzelungselement aufweist, welches als Scheibe mit mehreren als Ritzelzähne ausgebildeten Mitnahmeelementen ausgebildet ist. Eine solche Vereinzelungsvorrichtung umfasst dann neben dem einzelnen Vereinzelungselement ein, insbesondere als Gegenhalteplatte ausgebildetes, flächiges Gegenhalteelement. Das Vereinzelungselement und das Gegenhalteelement sind bei dieser Ausführungsform derart angeordnet, dass in einer möglichen Drehstellung des Vereinzelungselements auf einer gedachten Linie, die orthogonal zu einer Gegenhaltefläche des Gegenhalteelements verläuft und die Drehachse des Vereinzelungselements schneidet, die Stirnseite eines Ritzelzahns des Vereinzelungselements gegenüber der Gegenhaltefläche steht.

Die Vereinzelungsvorrichtung ist insbesondere in Förderrichtung gesehen vor einem, mehreren oder allen Entscheidungspunkten oder Anwendungen der Fördervorrichtung angeordnet. Zusätzlich oder alternativ ist die Vereinzelungsvorrichtung insbesondere in Förderrichtung gesehen hinter einem Stau erzeugenden Abschnitt der Fördervorrichtung, insbesondere einem Stauförderer oder einer Gefällestrecke angeordnet.

Mittels der erfindungsgemäßen Vereinzelungsvorrichtung ist eine Verwendung von Pneumatik nicht erforderlich. Außerdem ermöglicht die erfindungsgemäße Vereinzelungsvorrichtung eine erhöhte Prozesssicherheit gegenüber einer Vereinzelungsvorrichtung mit linear beweglichem Vereinzelungselement, da ein Durchlassen von mehr als einem Halteadapter ausgeschlossen werden kann.

Die erfindungsgemäße Vereinzelungsvorrichtung hat zudem den Vorteil, dass diese endlos in eine Richtung laufen kann und somit keinen Zyklus zur Vereinzelung abfahren muss, also keine Zeit für eine Rückstellung des Vereinzelungselements in eine Ausgangsposition benötigt wird. Damit kann gegenüber der bekannten Vereinzelungsvorrichtung ein höherer Durchsatz der Vereinzelungsvorrichtung und somit eine höhere Leistung der Fördervorrichtung erreicht werden. Ebenfalls ist der Wartungsaufwand geringer als bei der bekannten Lösung.

Besonders vorteilhaft ist vorgesehen, dass in Drehrichtung des jeweiligen Vereinzelungselements gesehen eine vordere Flanke zumindest eines der Ritzelzähne steiler ausgebildet ist als eine hintere Flanke desselben Ritzelzahns. Vorzugsweise ist jeder Ritzelzahn von jedem der beiden Vereinzelungselemente mit derart ausgebildeten Flanken versehen.

Die vordere steile Flanke des Ritzelzahns dient einem Herausdrücken oder Herausschieben der Halteadapter aus der Vereinzelungsvorrichtung. Der Halteadapter kann dadurch beim Verlassen der Vereinzelungsvorrichtung auf eine Geschwindigkeit beschleunigt werden, welche insbesondere der eines in Förderrichtung nach der Vereinzelungsvorrichtung vorgesehenen Förderers bzw. Abziehförderers gleicht.

Die hintere flachere Flanke des Ritzelzahns hingegen dient einer reibungslosen Aufnahme des Halteadapters beziehungsweise dessen Angriffselements. Die Form der Ritzelzähne ist also derart ausgebildet, dass eine Kollision der Vereinzelungselemente mit einem aufzunehmenden Halteadapter, insbesondere mit dessen Angriffselement, vermieden wird, insbesondere dass der Halteadapter oder dessen Angriffselement nicht zwischen den Ritzelzähnen der beiden Vereinzelungselemente geklemmt wird.

Ebenfalls ist vorteilhaft vorgesehen, dass die zwei Vereinzelungselemente über kraftübertragende und/oder drehzahlübertragende Verbindungselemente miteinander in Verbindung stehen.

Die Verbindungselemente umfassen vorzugsweise eine Welle, mit welcher eines der Vereinzelungselemente verbunden ist. Die Verbindungselemente können auch mehrere Wellen umfassen, wobei dann beispielsweise das erste Vereinzelungselement mit einer ersten Welle und das zweite Vereinzelungselement mit einer zweiten Welle verbunden sein können. Zudem können die Verbindungselemente beispielsweise ein Kupplungselement, insbesondere einer Wellenkupplung, umfassen.

In vorteilhafter Weise umfassen die Verbindungselemente ein Getriebe mit einem Übersetzungsverhältnis von vorzugsweise 1:1.

Das Getriebe weist dabei insbesondere zwei Getrieberäder auf, wobei jedes der Getrieberäder mit einem Vereinzelungselement in Verbindung steht. Es ist dann beispielsweise denkbar, dass das erste und das zweite Vereinzelungselement in einer derartigen Verbindung stehen, bei der das erste Vereinzelungselement mit einer ersten Welle und die erste Welle mit einem ersten Getrieberad des Getriebes verbunden ist, das erste Getrieberad mit einer Übersetzung von 1:1 in ein zweites Getrieberad des Getriebes greift und das zweite Getrieberad mit einer zweiten Welle und die zweite Welle mit dem zweitem Vereinzelungselement verbunden ist.

Vorteilhaft kann vorgesehen sein, dass die Vereinzelungsvorrichtung ein Gehäuse zur Lagerung mindestens eines der Vereinzelungselemente aufweist, wobei das Vereinzelungselement vorzugsweise mittels eines Wälzlagers, insbesondere Kugellagers, an dem Gehäuse gelagert ist. Es können auch beide Vereinzelungselemente an dem Gehäuse gelagert sein.

Wenn eines der Vereinzelungselemente mit einer Welle verbunden ist, kann beispielsweise vorgesehen sein, dass die Lagerung des Vereinzelungselements an dem Gehäuse über die Welle erfolgt und diese dann vorzugsweise mittels zweier Kugellager an dem Gehäuse gelagert ist.

Besonders vorteilhaft ist vorgesehen, dass die Vereinzelungsvorrichtung einen rotierenden Aktor, vorzugsweise einen Elektromotor, vorzugsweise einen Schrittmotor umfasst, wobei mit dem Aktor eine Drehung mindestens eines der Vereinzelungselemente bewirkbar ist.

Der rotierende Aktor ist insbesondere von einer Antriebskette oder einem Antriebsriemen zu unterscheiden. Der Aktor kann beispielsweise mittels eines Kupplungselements mit einer Welle, welche ihrerseits mit dem Vereinzelungselement in Verbindung steht, verbunden sein. Es ist auch denkbar, dass der Aktor alternativ oder zusätzlich mittels eines Umlenkgetriebes, insbesondere eines Kegelradgetriebes, mit dem Vereinzelungselement verbunden ist.

Mit dem rotierenden Aktor kann das Vereinzelungselement auch in einer gewünschten Position gehalten werden, das heißt, dass von dem Aktor eine Gegenkraft zu einer von, insbesondere aufgestauten, Halteadaptern bewirkten Kraft aufgebracht werden kann. Bei der Ausführung als Schrittmotor ist dieser insbesondere so ausgebildet und eingerichtet, dass das Vereinzelungselement bei jeder Aktivierung des Schrittmotors um einen vorgegebenen Drehwinkel bzw. einen Ritzelzahn weiter gedreht wird und zwischen den Aktivierungen das Vereinzelungselement in Position gehalten wird.

Vorzugsweise ist mit einem einzelnen Aktor eine Drehung beider Vereinzelungselemente bewirkbar, wobei die Vereinzelungselemente dazu dann über Verbindungselemente miteinander in Verbindung stehen.

Die Steuerung der Vereinzelungsvorrichtung kann über eine zentrale Steuerung der Fördervorrichtung oder alternativ über eine separate, der Vereinzelungsvorrichtung zugeordneten, Steuerungseinheit erfolgen.

Die Erfindung richtet sich ferner auf ein System mit Halteadaptern und einer erfindungsgemäßen Vereinzelungsvorrichtung, wobei die Ritzelzähne derart zueinander angeordnet sind, dass in einem durch zwei benachbarte Ritzelzähne des ersten Vereinzelungselements und zwei benachbarte Ritzelzähne des zweiten Vereinzelungselements gebildeten Bereich lediglich ein einzelner Halteadapter, insbesondere ein einzelnes Angriffselement eines Halteadapters, Platz findet.

Durch den Abstand zweier benachbarter Ritzelzähne an dem ersten Vereinzelungselement und den Abstand zweier benachbarter Ritzelzähne an dem zweiten Vereinzelungselement sowie die Anordnung der beiden Vereinzelungselemente zueinander wird also ein Bereich gebildet oder aufgespannt. In diesen Bereich passt nur ein einzelner Halteadapter oder dessen Angriffselement hinein, sodass bei einem Vereinzelungsvorgang auch nur der eine Halteadapter von der Vereinzelungsvorrichtung "freigegeben" werden kann.

Insbesondere ist der Bereich durch die Form der Ritzelzähne hinsichtlich einer reibungslosen Aufnahme des Halteadapters bzw. dessen Angriffselement optimiert, wobei in Drehrichtung des jeweiligen Vereinzelungselements gesehen eine vordere Flanke zumindest eines der Ritzelzähne steiler ausgebildet als eine hintere Flanke desselben Ritzelzahns.

Mit der erfindungsgemäßen Vereinzelungsvorrichtung kann also sichergestellt werden, dass jeweils nur ein Halteadapter vereinzelt wird. Es kann also auf eine Sensortechnik zur Überprüfung, dass jeweils nur ein Halteadapter bei einem Vereinzelungsvorgang durch die Vereinzelungsvorrichtung hindurch kommt, verzichtet werden.

Es kann jedoch ein Sensor vorgesehen sein, welcher erkennt, ob sich überhaupt ein Halteadapter in dem auch als Vereinzelungsbereich bezeichneten Bereich befindet. Die Daten eines solchen Sensors könnten für eine gezielte Steuerung der Vereinzelungselemente verwendet werden.

In vorteilhafter Weise umfasst das System ein Schienenprofil zur Lagerung und Führung der Halteadapter, wobei jedes der zwei Vereinzelungselemente mit einer Welle verbunden ist und die Wellen beidseitig des Schienenprofils angeordnet sind.

Eine mit dem ersten Vereinzelungselement verbundene Welle ist dann also auf der einen Seite des Schienenprofils, beispielsweise in Förderrichtung gesehen rechts, und eine mit dem zweiten Vereinzelungselement verbundene Welle auf der anderen Seite des Schienenprofils, beispielsweise in Förderrichtung gesehen links, angeordnet.

Zudem kann in vorteilhafter Weise vorgesehen sein, dass das Gehäuse der Vereinzelungsvorrichtung das Schienenprofil zumindest teilweise umgreift.

Ein teilweises Umgreifen bedeutet, dass das Gehäuse auf und neben dem Schienenprofil oder unter und neben dem Schienenprofil angeordnet ist. Auch ist es möglich, dass das Gehäuse das Schienenprofil vollständig umgreift und dann neben, auf und unter dem Schienenprofil angeordnet ist, wobei selbst bei einem vollständigen Umgreifen ein Bereich für die Beförderung der Halteadapter frei bleibt.

Alternativ kann das Gehäuse auch derart ausgebildet sein, dass es lediglich auf dem Schienenprofil oder neben dem Schienenprofil oder unter dem Schienenprofil angeordnet ist.

Die Erfindung richtet sich ferner auf ein Verfahren zur Vereinzelung von Halteadaptern in einer Fördervorrichtung zur Beförderung von hängenden Gegenständen. Die Vereinzelung erfolgt mittels einer Vereinzelungsvorrichtung mit zwei Vereinzelungselementen, welche jeweils als Scheibe mit mehreren als Ritzelzähne ausgebildeten Mitnahmeelementen ausgebildet sind und welche in einer Ebene gegenläufig zueinander drehbar gelagert und beidseitig einer Förderstrecke mit zu vereinzelnden Halteadaptern angeordnet sind.

Das erfindungsgemäße Verfahren sieht vor, dass die Ritzelzähne derart zueinander angeordnet sind, dass in einem durch zwei benachbarte Ritzelzähne eines ersten Vereinzelungselements und zwei benachbarte Ritzelzähne eines zweiten Vereinzelungselements gebildeten Bereich lediglich ein einzelner Halteadapter, insbesondere das Angriffselement des einzelnen Halteadapters, Platz findet, und die Vereinzelungselemente gegenläufig zueinander um einen vorgegebenen Drehwinkel gedreht werden, um den einzelnen Halteadapter aus einer, insbesondere aufgestauten, Gruppe von Halteadaptern herauszutrennen und somit zu vereinzeln.

Mit anderen Worten werden bei dem auch als Vereinzelungsverfahren bezeichneten Verfahren zwei beidseitig der, insbesondere durch ein Schienenprofil gebildeten, Förderstrecke angeordnete Vereinzelungselemente zeitgleich bzw. synchron um einen vorgegebenen Drehwinkel gedreht, um einen Halteadapter zu vereinzeln und somit einen Vereinzelungsvorgang durchzuführen.

Der vorgegebene Drehwinkel, um den die Vereinzelungselemente bei jedem Vereinzelungsvorgang gedreht werden, ergibt sich aus der Anzahl der Ritzelzähne. Ein Vereinzelungsvorgang entspricht insbesondere einem Drehwinkel von 360° geteilt durch die Anzahl der Ritzelzähne an einem der Vereinzelungselemente. Anders ausgedrückt, werden für jede Vereinzelung die Vereinzelungselemente um einen Ritzelzahn weiter gedreht.

Bei einer solchen Drehung wird ein in Förderrichtung vorne anliegender Halteadapter mittels der Vereinzelungselemente auf einer Ausgangsseite der Vereinzelungsvorrichtung herausgedrückt bzw. herausgeschoben. Da zwischen den Ritzelzähnen des ersten Vereinzelungselements und den Ritzelzähnen des zweiten Vereinzelungselements kein Versatz vorgesehen ist, erfolgt das Herausdrücken bzw. Herausschieben mit jeweils einem an den Halteadapter angreifenden Ritzelzahn von jedem der beiden Vereinzelungselemente.

Zudem wird bei einer solchen Drehung ein ggf. nachfolgender Halteadapter in den Bereich zwischen den Vereinzelungselementen aufgenommen und dort festgehalten.

Vorzugsweise ist bei der für das Verfahren verwendeten Vereinzelungsvorrichtung in Drehrichtung des jeweiligen Vereinzelungselements gesehen eine vordere Flanke zumindest eines der Ritzelzähne steiler ausgebildet als eine hintere Flanke desselben Ritzelzahns. Zudem umfasst die für das Verfahren verwendete Vereinzelungsvorrichtung vorzugsweise einen rotierenden Aktor, mit welchem die Drehung der Vereinzelungselemente bewirkt wird.

Mit dem erfindungsgemäßen Verfahren ist es möglich, zwischen Halteadaptern, die der Vereinzelungsvorrichtung, insbesondere aufgrund des vorgelagerten Stau erzeugenden Abschnitts, in einer Gruppe ohne Abstand zueinander oder mit einem undefinierten und ggf. variierenden Abstand zueinander zugeführt werden, einen definierten Abstand zu erzeugen, damit die Halteadapter einzeln und damit prozesssicher an den nachgeschalteten Entscheidungspunkten oder Anwendungen der Fördervorrichtung weiter gehandhabt werden können. Der definierte Abstand ist vorzugsweise konstant über eine bestimmte Anzahl von Halteadaptern. Es ist jedoch auch denkbar, dass der Abstand für jedes Paar von benachbarten Halteadaptern einzeln definiert ist, also variabel gestaltet werden kann.

Mit dem erfindungsgemäßen Verfahren ist nur eine Drehung der Vereinzelungselemente in eine Richtung erforderlich. Eine Rückstellung des Vereinzelungselements in eine Ausgangsposition ist nicht erforderlich.

Weitere Details der Erfindung ergeben sich aus der nachfolgenden Beschreibung von Ausführungsbeispielen anhand der Zeichnung, in der
- Fig. 1: eine Schnittansicht von vier Halteadaptern und eine schematische Draufsicht einer Ausführungsform der erfindungsgemäßen Vereinzelungsvorrichtung zu einem ersten Zeitpunkt,
- Fig. 1a: eine Schnittansicht von vier Halteadaptern und eine schematische Draufsicht der Ausführungsform der Vereinzelungsvorrichtung aus Fig. 1 zu einem zweiten Zeitpunkt,
- Fig. 2: eine schematische perspektivische Ansicht eines Systems mit einer Ausführungsform der erfindungsgemäßen Vereinzelungsvorrichtung,
- Fig. 3: eine kombinierte Seiten- und Schnittansicht des Systems aus Fig. 2,
- Fig. 4: eine schematische perspektivische Ansicht eines Systems mit einer weiteren Ausführungsform der erfindungsgemäßen Vereinzelungsvorrichtung,
- Fig. 5: eine kombinierte Seiten- und Schnittansicht des Systems aus Fig. 4 zeigen.

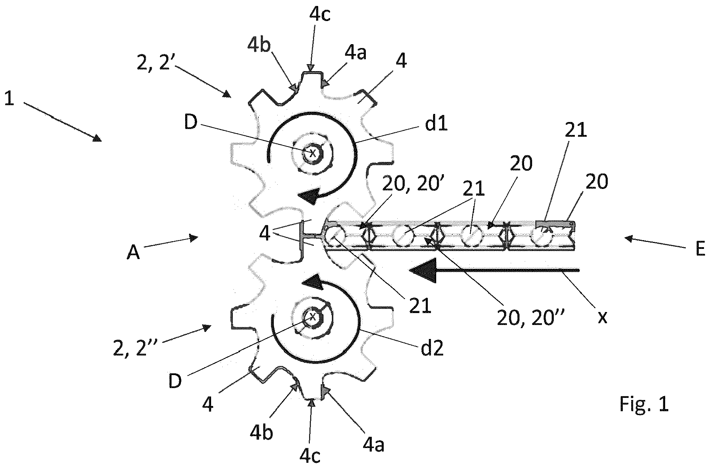

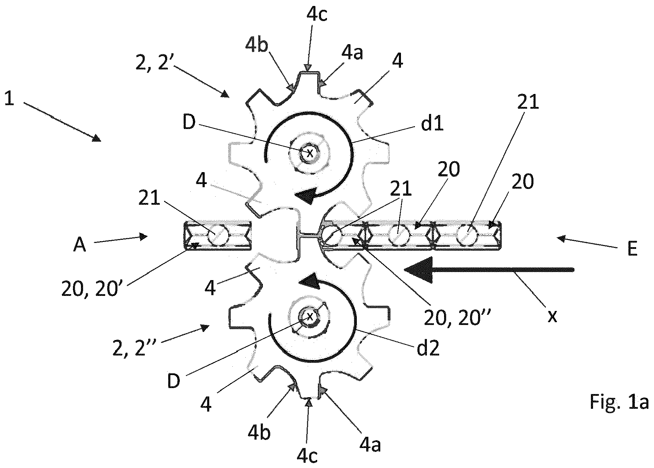

In der Figur 1 sind eine Schnittansicht von vier Halteadaptern 20 und eine schematische Draufsicht einer Ausführungsform der erfindungsgemäßen Vereinzelungsvorrichtung 1 zu einem ersten Zeitpunkt gezeigt. In der Figur 1a sind eine Schnittansicht von vier Halteadaptern 20 und eine schematische Draufsicht der Ausführungsform der Vereinzelungsvorrichtung 1 aus Figur 1 zu einem zweiten Zeitpunkt gezeigt. Der zweite Zeitpunkt unterscheidet sich von dem ersten Zeitpunkt, wobei der zweite Zeitpunkt der Figur 1a später als der erste Zeitpunkt der Figur 1 ist.

Die Vereinzelungsvorrichtung 1 weist zwei scheibenförmige Vereinzelungselemente 2 auf, welche in einer Ebene und jeweils um eine Drehachse D gegenläufig zueinander drehbar gelagert sind. Ein erstes Vereinzelungselement 2' ist dazu in einer ersten Drehrichtung d1 bzw. im Uhrzeigersinn und ein zweites Vereinzelungselement 2" in einer zweiten Drehrichtung d2 bzw. entgegen des Uhrzeigersinns drehbar gelagert.

Die Vereinzelungselemente 2 sind beidseits einer Förderstrecke, die für eine Förderung von Halteadaptern 20 vorgesehen ist, spiegelsymmetrisch angeordnet. Die Halteadapter 20, welche in einer Förderrichtung x förderbar sind, sind durch die beiden Vereinzelungselemente 2 hindurch beförderbar. Die Förderrichtung x verläuft dabei so, dass sie mit der ersten Drehrichtung d1 und der zweiten Drehrichtung d2 "harmoniert".

Die Vereinzelungselemente 2 weisen Mitnahmeelemente auf, welche als Ritzelzähne 4 ausgebildet sind. Die Ritzelzähne 4 sind für eine Mitnahme der Halteadapter 20, insbesondere durch Angreifen an einem Angriffselement 21 des Halteadapters 20, geeignet. Im gezeigten Ausführungsbeispiel haben beide Vereinzelungselemente 2 jeweils acht Ritzelzähne 4.

Gut zu erkennen ist, dass in Drehrichtung d des jeweiligen Vereinzelungselements 2 gesehen eine vordere Flanke 4a der Ritzelzähne 4 steiler ausgebildet ist als eine hintere Flanke 4b der Ritzelzähne 4. Hierdurch kann das Angriffselement 21 eines ersten Halteadapters 20' (siehe Figur 1) bzw. das Angriffselement 21 eines zweiten Halteadapters 20" (siehe Figur 1a) in einen Bereich zwischen zwei benachbarte Ritzelzähne 4 des ersten Vereinzelungselements 2' und zwei benachbarte Ritzelzähne 4 des zweiten Vereinzelungselements 2" reibungslos aufgenommen werden. Der Bereich ist so ausgebildet, dass in diesen lediglich ein einzelnes Angriffselement 21 hinein passt bzw. darin Platz findet.

Gut zu erkennen ist ebenfalls, dass in der gezeigten Drehstellung der Vereinzelungselemente 2 auf einer gedachten Linie zwischen der Drehachse D des ersten Vereinzelungselements 2' und einer Drehachse D des zweiten Vereinzelungselements 2" ein Ritzelzahn 4 des ersten Vereinzelungselements 2' und ein Ritzelzahn 4 des zweiten Vereinzelungselements 2" mit ihren Stirnseiten 4c gegenüber stehen. Die vier Halteadapter 20 (siehe Figur 1) bzw. die drei Halteadapter (siehe Figur 1a) sind zu den gezeigten Zeitpunkten an den so angeordneten Ritzelzähnen 4 auf einer Eingangsseite E der Vereinzelungsvorrichtung 1 in einer Gruppe aufgestaut.

Bei dem Vereinzelungsverfahren werden die Vereinzelungselemente 2 zeitgleich bzw. synchron um einen vorgegebenen Drehwinkel gegenläufig zueinander gedreht, um den in Förderrichtung vorne anliegenden ersten Halteadapter 20' (siehe Figur 1) bzw. zweiten Halteadapter 20" (siehe Figur 1a) aus der aufgestauten Gruppe von Halteadaptern 20 herauszutrennen und zu vereinzeln und somit einen ersten Vereinzelungsvorgang durchzuführen.

Der vorgegebene Drehwinkel, um den die Vereinzelungselemente 2 bei jedem Vereinzelungsvorgang gedreht werden, ergibt sich aus der Anzahl der Ritzelzähne 4. Ein Vereinzelungsvorgang entspricht insbesondere einem Drehwinkel von 360° geteilt durch die Anzahl der Ritzelzähne 4 an einem der Vereinzelungselemente. Im vorliegenden Fall beträgt der Drehwinkel 360° geteilt durch acht Ritzelzähne 4 gleich 45°.

Bei einer solchen (nicht gezeigten) Drehung wird der in Förderrichtung vorne anliegende erste Halteadapter 20' (siehe Figur 1) bzw. zweite Halteadapter 20" (siehe Figur 1a) mittels der beiden an diesen angreifenden Ritzelzähne 4 auf einer Ausgangsseite A der Vereinzelungsvorrichtung 1 herausgedrückt bzw. herausgeschoben.

An dem in der Figur 1a gezeigten Zeitpunkt ist der erste Halteadapter 20` bereits vereinzelt. Wie in der Figur 1a zu sehen ist, wird der nachfolgende zweite Halteadapter 20" an den Ritzelzähnen 4, insbesondere an denselben Ritzelzähnen 4, mit denen der erste Halteadapter 20' zuvor herausgedrückt bzw. herausgeschoben wurde, festgehalten. Der zweite Halteadapter 20" ist dann bereits in den Bereich zwischen den Vereinzelungselementen 2 aufgenommen.

Der zuvor beschriebene Vereinzelungsvorgang wiederholt sich, um den zweiten Halteadapter 20" sowie weitere Halteadapter 20 zu vereinzeln.

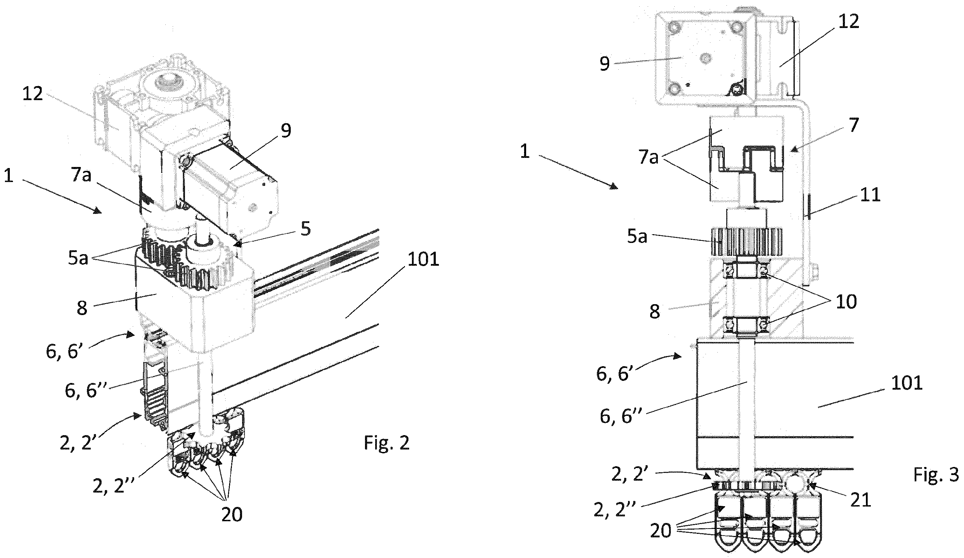

In der Figur 2 ist eine schematische perspektivische Ansicht eines Systems mit einer Ausführungsform der erfindungsgemäßen Vereinzelungsvorrichtung 1 gezeigt. In der Figur 3 ist eine kombinierte Seiten- und Schnittansicht des Systems aus Figur 2 gezeigt.

Das System umfasst neben der Vereinzelungsvorrichtung 1 ein Schienenprofil 101 sowie vier Halteadapter 20, welche in dem Schienenprofil 101 gelagert und geführt sind. Die Halteadapter 20 weisen jeweils ein Angriffselement 21 auf, welches vorliegend durch ein unterhalb des Schienenprofils 101 angeordnetes Halsteil des Halteadapters 20 gebildet ist.

Die Vereinzelungsvorrichtung 1 weist neben den Vereinzelungselementen 2 einen Aktor 9, ein Umlenkgetriebe 12, eine Wellenkupplung 7, ein Getriebe 5, ein Gehäuse 8 sowie eine erste Welle 6' und eine zweite Welle 6" auf.

Der Aktor 9 ist vorliegend als Elektromotor, genauer gesagt, als Schrittmotor ausgebildet. Mit dem Aktor 9 wird die erste Welle 6' angetrieben, wobei zwischen der ersten Welle 6' und dem Aktor 9 das Umlenkgetriebes 12 und die Wellenkupplung 7 angeordnet sind. Die Wellenkupplung 7 umfasst zwei Kupplungselemente 7a, wobei eines der Kupplungselemente 7a mit der ersten Welle 6' und das andere Kupplungselement 7a mit einer Ausgangswelle des Umlenkgetriebes 12 verbunden ist. Alternativ kann bei einer Ausführungsform ohne ein Umlenkgetriebe 12 das letztgenannte Kupplungselement 7a auch direkt mit dem Aktor 9, insbesondere mit dessen Rotor, verbunden sein.

Das Gehäuse 8 ist bei der gezeigten Ausführungsform auf dem Schienenprofil angeordnet. Der Aktor 9 und das Umlenkgetriebe 12 sind über eine L-förmige Konsole 11 an dem Gehäuse 8 befestigt. Vorliegend ist die Konsole 11 mittels einer Schraubverbindung befestigt. Es ist jedoch auch jegliche andere Verbindungsart, wie beispielsweise eine formschlüssige Verbindung, möglich.

Das Getriebe 5 weist zwei gleichgroße und gleichzahnige Getrieberäder 5a auf, die ineinander greifen. Das Getriebe 5 hat vorliegend somit ein Übersetzungsverhältnis von 1:1. Die Getrieberäder 5a sind in der gezeigten Ausführungsform außerhalb des Gehäuses 8 angeordnet. Es ist denkbar, dass diese alternativ innerhalb des Gehäuses 8 angeordnet sind.

Die erste Welle 6' ist mit einem der Getrieberäder 5a und zudem mit dem ersten (nicht zu sehenden) Vereinzelungselement 2' verbunden. Die zweite Welle 6" ist mit dem weiteren Getrieberad 5a und zudem mit dem zweiten Vereinzelungselement 2" verbunden. Das erste Vereinzelungselement 2' und das zweite Vereinzelungselement 2" weisen die erfindungsgemäßen Ritzelzähne 4 auf.

Beide Wellen 6 sind über jeweils zwei Kugellager 10 an dem Gehäuse 8 gelagert. In der Figur 3 ist die Lagerung der zweiten Welle 6" gut zu erkennen. Die Kugellager 10 sind beabstandet zueinander angeordnet. Die nicht zu sehende erste Welle 6` ist in ähnlicher Weise an dem Gehäuse 8 gelagert.

Die Wellen 6 sind beidseitig des Schienenprofils 101 angeordnet. In der Darstellung ist jedoch lediglich die zweite Welle 6" zu sehen. Die erste Welle 6` ist nicht zu sehen, da diese von dem Schienenprofil 101 verdeckt ist.

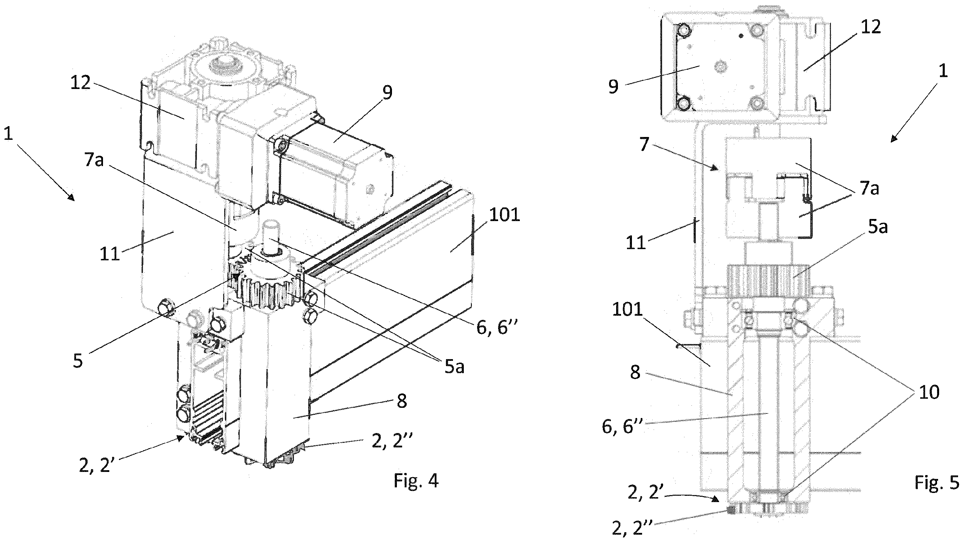

In der Figur 4 ist eine schematische perspektivische Ansicht eines Systems mit einer weiteren Ausführungsform der erfindungsgemäßen Vereinzelungsvorrichtung 1 gezeigt. In der Figur 5 ist eine kombinierte Seiten- und Schnittansicht des Systems aus Figur 4 gezeigt.

Die in den Figuren 4 und 5 gezeigte Ausführungsform unterscheidet sich von der in den Figuren 2 und 3 gezeigten Ausführungsform durch die Ausbildung des Gehäuses 8. Während das Gehäuse 8 in der in den Figuren 2 und 3 gezeigten Ausführungsform auf dem Schienenprofil 101 angeordnet ist, ist das Gehäuse 8 der in den Figuren 4 und 5 gezeigten Ausführungsform auf, neben und unter dem Schienenprofil 101 angeordnet und umgreift dieses somit vollständig. Es sind alternativ auch Ausführungsformen denkbar, bei denen das Gehäuse 8 das Schienenprofil 101 lediglich teilweise umgreift.

Aufgrund des so gestalteten Gehäuses 8 kann insbesondere die Lagerung der beiden Wellen 6 unterschiedlich zu der in den Figuren 2 und 3 gezeigten Lagerung erfolgen, wobei die beiden Kugellager 10 in einem größeren Abstand zueinander angeordnet sind.

Im Übrigen gilt die Beschreibung zu den Figuren 2 und 3 analog für die Figuren 4 und 5.

Auch wenn in den Figuren 4 und 5 keine Halteadapter 20 gezeigt sind, sind diese jedoch, genauso wie bei der in den Figuren 2 und 3 gezeigten Ausführungsform, in dem Schienenprofil lagerbar und führbar sowie mit der gezeigten Vereinzelungsvorrichtung 1 vereinzelbar.

### Bezugszeichenliste

- 1: Vereinzelungsvorrichtung
- 2: Vereinzelungselement
- 2`: erstes Vereinzelungselement
- 2": zweites Vereinzelungselement
- 4: Ritzelzahn
- 4a: vordere Flanke
- 4b: hintere Flanke
- 4c: Stirnseite
- 5: Getriebe
- 5a: Getrieberad
- 6: Welle
- 6`: erste Welle
- 6": zweite Welle
- 7: Wellenkupplung
- 7a: Kupplungselement
- 8: Gehäuse
- 9: Aktor
- 10: Kugellager
- 11: Konsole
- 12: Umlenkgetriebe
- 20: Halteadapter
- 20': erster Halteadapter
- 20": zweiter Halteadapter
- 21: Angriffselement
- 101: Schienenprofil
- A: Ausgangsseite
- d1: erste Drehrichtung
- d2: zweite Drehrichtung
- D: Drehachse
- E: Eingangsseite
- x: Förderrichtung

## Patentansprüche

1. Vereinzelungsvorrichtung (1) zur Vereinzelung von Halteadaptern (20) in einer Fördervorrichtung zur Beförderung von hängenden Gegenständen, wobei die Vereinzelungsvorrichtung (1) zwei Vereinzelungselemente (2) aufweist, welche jeweils als Scheibe mit mehreren als Ritzelzähne (4) ausgebildeten Mitnahmeelementen ausgebildet sind und welche in einer Ebene gegenläufig zueinander drehbar gelagert und derart zueinander beabstandet angeordnet sind, dass Halteadapter (20) durch die Vereinzelungselemente (2) hindurch beförderbar sind, **dadurch gekennzeichnet, dass** sich in einer möglichen Drehstellung der Vereinzelungselemente (2) auf einer gedachten Linie zwischen einer Drehachse (D) eines ersten Vereinzelungselements (2`) und einer Drehachse (D) eines zweiten Vereinzelungselements (2") ein Ritzelzahn (4) des ersten Vereinzelungselements (2`) und ein Ritzelzahn (4) des zweiten Vereinzelungselements (2") mit ihren Stirnseiten (4c) gegenüber stehen.

2. Vereinzelungsvorrichtung (1) nach Anspruch 1, **dadurch gekennzeichnet, dass** in Drehrichtung (d) des jeweiligen Vereinzelungselements (2) gesehen eine vordere Flanke (4a) zumindest eines der Ritzelzähne (4) steiler ausgebildet ist als eine hintere Flanke (4b) desselben Ritzelzahns (4).

3. Vereinzelungsvorrichtung (1) nach Anspruch 1 oder 2, **dadurch gekennzeichnet, dass** die zwei Vereinzelungselemente (2) über drehmomentübertragende und/oder drehzahlübertragende Verbindungselemente miteinander in Verbindung stehen.

4. Vereinzelungsvorrichtung (1) nach Anspruch 3, **dadurch gekennzeichnet, dass** die Verbindungselemente ein Getriebe (5) mit einem Übersetzungsverhältnis von vorzugsweise 1:1 umfassen.

5. Vereinzelungsvorrichtung (1) nach einem der vorhergehenden Ansprüche, **dadurch gekennzeichnet, dass** diese ein Gehäuse (8) zur Lagerung mindestens eines der Vereinzelungselemente (2) aufweist, wobei das Vereinzelungselement (2) vorzugsweise mittels eines Wälzlagers, vorzugsweise Kugellagers (10), an dem Gehäuse (8) gelagert ist.

6. Vereinzelungsvorrichtung (1) nach einem der vorhergehenden Ansprüche, **dadurch gekennzeichnet, dass** diese einen rotierenden Aktor (9), vorzugsweise einen Elektromotor, vorzugsweise einen Schrittmotor umfasst, wobei mit dem Aktor (9) eine Drehung mindestens eines der Vereinzelungselemente (2) bewirkbar ist.

7. System mit Halteadaptern (20) und einer Vereinzelungsvorrichtung (1) nach einem der vorhergehenden Ansprüche, **dadurch gekennzeichnet, dass** die Ritzelzähne (4) derart zueinander angeordnet sind, dass in einem durch zwei benachbarte Ritzelzähne (4) des ersten Vereinzelungselements (2`) und zwei benachbarte Ritzelzähne (4) des zweiten Vereinzelungselements (2") gebildeten Bereich lediglich ein einzelner Halteadapter (20), insbesondere ein Angriffselement (21) des einzelnen Halteadapters (20), Platz findet.

8. System nach Anspruch 7, wobei das System ein Schienenprofil (101) zur Lagerung und Führung der Halteadapter (20) umfasst, **dadurch gekennzeichnet, dass** jedes der zwei Vereinzelungselemente (2) mit einer Welle (6) verbunden ist und die Wellen (6) beidseitig des Schienenprofils (101) angeordnet sind.

9. System nach Anspruch 8, wobei die Vereinzelungsvorrichtung die Merkmale von Anspruch 5 umfasst, **dadurch gekennzeichnet, dass** das Gehäuse (8) der Vereinzelungsvorrichtung (1) das Schienenprofil (101) zumindest teilweise umgreift.

10. Verfahren zur Vereinzelung von Halteadaptern (20) in einer Fördervorrichtung zur Beförderung von hängenden Gegenständen, wobei die Vereinzelung mittels einer Vereinzelungsvorrichtung (1) mit zwei Vereinzelungselementen (2) erfolgt, welche jeweils als Scheibe mit mehreren als Ritzelzähne (4) ausgebildeten Mitnahmeelementen ausgebildet sind und welche in einer Ebene gegenläufig zueinander drehbar gelagert und beidseitig einer Förderstrecke mit zu vereinzelnden Halteadaptern (20) angeordnet sind, **dadurch gekennzeichnet, dass** die Ritzelzähne (4) derart zueinander angeordnet sind, dass in einem durch zwei benachbarte Ritzelzähne (4) eines ersten Vereinzelungselements (2`) und zwei benachbarte Ritzelzähne (2) eines zweiten Vereinzelungselements (2") gebildeten Bereich lediglich ein einzelner Halteadapter (20) insbesondere ein Angriffselement (21) des einzelnen Halteadapters (20), Platz findet, und die Vereinzelungselemente (2) gegenläufig zueinander um einen vorgegebenen Drehwinkel gedreht werden, um den einzelnen Halteadapter (20) aus einer, insbesondere aufgestauten, Gruppe von Halteadaptern (20) herauszutrennen und somit zu vereinzeln.
